(19) Europäisches Patentamt

European Patent Office

Office européen des brevets

(11) Veröffentlichungsnummer: **0 294 324 B1**

# (12) EUROPÄISCHE PATENTSCHRIFT

(45) Veröffentlichungstag der Patentschrift:
**06.03.91 Patentblatt 91/10**

(21) Anmeldenummer: **88810316.5**

(22) Anmeldetag: **13.05.88**

(51) Int. Cl.⁵: **B23K 26/14, B23K 26/00**

---

(54) **Laserbearbeitungswerkzeug.**

---

(30) Priorität: **18.05.87 CH 1901/87**

(43) Veröffentlichungstag der Anmeldung:
**07.12.88 Patentblatt 88/49**

(45) Bekanntmachung des Hinweises auf die
Patenterteilung:
**06.03.91 Patentblatt 91/10**

(84) Benannte Vertragsstaaten:
**CH DE FR GB IT LI SE**

(56) Entgegenhaltungen:
EP-A- 0 007 034
EP-A- 0 129 603
EP-A- 0 209 488

(56) Entgegenhaltungen:
DE-U- 8 337 305
FR-A- 2 086 509
FR-A- 2 564 349
GB-A- 2 064 399
US-A- 4 431 899

(73) Patentinhaber: **C.A. Weidmüller GmbH & Co.
Klingenbergstrasse 16
W-4930 Detmold (DE)**

(72) Erfinder: **Vornfett, Karl-Ulrich
Krippenhof 20
W-7570 Baden-Baden (DE)**

(74) Vertreter: **Wenger, René et al
Hepp & Partner AG Marktgasse 18
CH-9500 Wil (CH)**

# Beschreibung

Die Erfindung bezieht sich auf ein Laserbearbeitungswerkzeug mit einer Düse für die Zufuhr eines Arbeitsgases zu einem Werkstück. Leistungslaser für die Materialbearbeitung werden in immer steigendem Masse in der Industrie eingesetzt. Beim Schneiden und Schweissen von Blechen und Stahlteilen sind sie bereits weit verbreitet.

Für die Zuleitung der für den Arbeitsprozess erforderlichen Arbeitsgase, wie z.B. Schutzgas beim Schweissen zum Fernhalten des die Schweissstelle umgebenden Luftsauerstoffs oder Sauerstoff beim Brennschneiden, werden Düsen verwendet, durch die sowohl der fokussierte Laserstrahl, als auch das Arbeitsgas austritt. Diesen Düsen sind in der Regel abstandssensitive Sensoren zugeordnet, die dafür sorgen, dass vor dem Beginn des Arbeitsprozesses oder während des Arbeitsprozesses der Abstand zwischen Düsenspitze und Werkstück konstant bleibt. Bei Schneidbrennköpfen ist der Sensor vorzugsweise in die Düsenspitze integriert. Ein Beispiel für eine derartige Steuervorrichtung ist in der EP-A-7034 beschrieben.

Bei der Bearbeitung von Metallen mittels Leistungslasern entsteht eine erhebliche Wärmeentwicklung. Besonders beim Schneiden und Schweissen von dicken Metallblechen bis etwa 12 mm und darüber ist die vom Werkstück ausgehende Wärmestrahlung in Folge der hohen Wärmekapazität und der langen Abkühlzeit in unmittelbarer Nähe der Düse sehr hoch. Dadurch werden die unmittelbar über der Wärmezone angeordneten Bauteile stark aufgeheizt, so dass die Funktion des elektronischen Sensorteiles in der Düse beeinträchtigt werden kann. Ausserdem können Metallspritzer ständig die Düse treffen und somit weitere Temperaturerhöhungen bewirken

Es sind zwar bereits aus der GB-A-2 064 399 Laserbearbeitungswerkzeuge bekannt, die an der Düsenspitze einen konzentrischen Kühlkanal für die Zufuhr eines Kühlmediums aufweisen. Diese Kühlkanäle sind aber nicht eigentlich in die Düse integriert, sondern eher als zusätzliche Anbauteile gedacht. Eine Lösung für das Problem der Abstandssensorik wird nicht vorgeschlagen.

Bei bisher bekannten Laserarbeitsköpfen wurde die Sensorelektronik aus Stabilitätsgründen und zum Schutz vor Wärmeeinwirkung aus dem eigentlichen Düsenkörper in einen externen Vorverstärker verlagert. Dies macht es ersichtlicherweise notwendig, dass die als Sensorelektrode ausgebildete Düsenspitze über ein mehr oder weniger langes Koaxialkabel mit der Sensorelektronik verbunden wird. Dieses ist jedoch aus mechanischen und elektronischen Gesichtspunkten hinderlich.

Es ist daher eine Aufgabe der Erfindung, eine Vorrichtung der eingangs genannten Art zu schaffen, bei der die Düse vor übermässiger Wärmeeinwirkung geschützt wird und bei der insbesondere die Düsenspitze als Sensorelement für die Abstandsmessung bzw. Abstandsregelung ausgebildet werden kann, wobei die Sensorelektronik so nahe wie möglich an der Düsenspitze angeordnet ist, um möglichst präzise Messimpulse zu erhalten. Diese Aufgabe wird mit einer Vorrichtung gelöst, welche die Merkmale im Anspruch 1 aufweist. Die Ringkammer ermöglicht auf einfachste Weise die Zufuhr eines Kühlgases an den Ort der stärksten Wärmeentwicklung oder auch die Zufuhr eines zusätzlichen Arbeitsgases für die Beeinflussung des Arbeitsprozesses. Gleichzeitig wird aber auch die in der Ringkammer angeordnete Sensorelektronik gekühlt und muss somit nicht in unnötiger Entfernung von der Düsenspitze bzw. von der Sensorelektrode angeordnet werden. Die Sensorelektronik ist dabei vorzugsweise ebenfalls ringförmig ausgebildet, so dass sie sich platzsparend im konzentrischen Kanal unterbringen lässt.

Die erfindungsgemässen Vorteile lassen sich insbesondere mit Düsen erzielen, die zusammen mit dem Ringkanal eine kompakte Einheit bilden. So kann die Düsenspitze als vorzugsweise einstückiges Bauteil ausgebildet sein, das den Endabschnitt der Düse bildet und das wenigstens eine Austrittsöffnung aufweist, die in Wirkverbindung mit der Ringkammer steht. Durch die kompakte Bauweise werden die Dimensionen der Düse gegen aussen nur unwesentlich vergrössert. Dafür kann das zusätzliche Kühl- oder Arbeitsgas noch präziser ans Zentrum der Wärmeentwicklung geführt werden.

Wenn die Ringkammer an der Düsenspitze in einen Ringspalt mündet, kann damit zusätzlich zur Kühlung auch noch eine Beeinflussung des Strömungsverhaltens des Arbeitsgases erreicht werden. Auf diese Weise lässt sich der Verbrauch des Arbeitsgases eventuell reduzieren.

Laserdüsenspitzen können sich bei Reflexion des Laserstrahles vom Werkstück unter bestimmten Bedingungen rotglühend aufheizen. Dies führt meistens zur Zerstörung des keramischen Sensorteiles oder der Düsenspitze. Bisher bekannte Lösungen kühlen die Düsenspitze nur an der Oberfläche, sind nicht so effektiv und führen auch zu grösseren Bauvolumen.

Eine besonders optimale Kühlwirkung kann erzielt werden, wenn die Ringkammer an der Düsenspitze in eine Mehrzahl über den Umfang der Aussenwand verteilter Kühlöffnungen mündet. Dadurch kann eine Kühlung der Düsenspitze von innen her erfolgen, wobei je nach Anzahl der Bohrungen eine sehr grosse Kühlfläche erzielt werden kann.

Die Kühlöffnungen können unmittelbar durch eine bestimmte Materialstruktur oder durch Bohrungen gebildet werden. Die Bohrungen, die einen Durchmesser vorzugsweise im Zehntelmillimeterbereich und kleiner haben, werden in entsprechend grosser Anzahl durch Elektrodenstrahlbohren und Erodieren angebracht.

Besonders vorteilhaft kann es sein, wenn die Kühlöffnungen nur bei kritischen Temperatursituationen freigegeben werden und bei Normalbetrieb geschlossen bleiben. Auf diese Weise kann Arbeits- oder Kühlgas eingespart werden.

Verschiedene Ausführungsbeispiele der Erfindung sind in den Zeichnungen dargestellt und werden nachstehend genauer beschrieben. Es zeigen :

Figur 1 einen querschnitt durch ein Laserbearbeitungswerkzeug mit konzentrischer Ringkammer und darin angeordneter Sensorelektronik in Kompaktbauweise,

Figur 2 einen Teilquerschnitt durch eine Düsenspitze mit feinen Bohrungen als Austrittsöffnung,

Figuren 3 und 4 eine Düsenspitze mit einem Ringspalt als Austrittssöffnung,

Figuren 5a und 5b zwei Varianten von Kühlöffnungen mit Schliessvorrichtung.

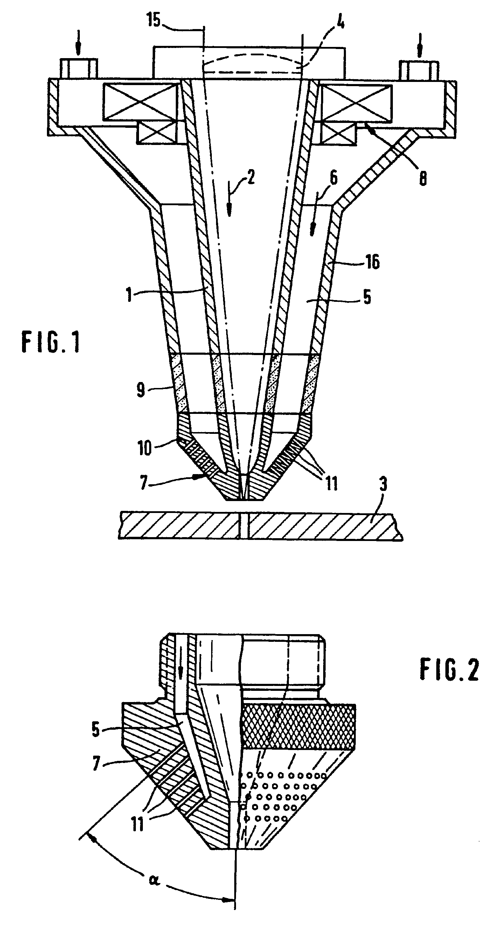

Figur 1 zeigt den Kopf eines Laserschneidwerkzeuges, dessen Düse 1 mit der Düsenspitze 7 unmittelbar über das zu schneidende Werkstück 3 geführt wird. Der grundsätzliche Aufbau derartiger Laserschneidköpfe ist bekannt und wird daher hier nur schematisch dargestellt. Ein Laserstrahl 15 trifft von oben auf eine im Kopf untergebrachte Laseroptik 4 und wird von dort auf das Werkstück 3 fokussiert. Gleichzeitig wird in die koaxial mit der optischen Achse der Laseroptik 4 verlaufende Düse 1 ein Arbeitsgas 2 geleitet, welches an der Düsenspitze 7 austritt. Dieses Arbeitsgas ist beispielsweise Sauerstoff, mit dessen Hilfe der zu trennende Werkstoff oxydiert und weggeblasen wird.

Die Düsenspitze 7 ist wegen der Wärmekapazität aus Kupfer angefertigt und wird in einem Keramikteil 9 an der Düse 1 gehalten.

Die Düse 1 ist in kompakter Bauweise von einer Aussenwand 16 umgeben, welche ggf. auch einstückig mit der Düse 1 ausgebildet sein kann. Innerhalb der konzentrischen Ringkammer 5 ist eine Sensorelektronik 8 untergebracht, was erhebliche technische Vorteile bringt. Beim dargestellten Ausführungsbeispiel ist die Sensorelektronik 8 nahe an der Düsenspitze 7 angeordnet, die als Sensorelektrode ausgebildet ist. Die vorzugsweise ringförmig ausgebildete Sensorelektronik 8 wird praktisch allseitig von Kühl- oder Arbeitsgas 6 umströmt und so vor unerwünschter Wärmeeinwirkung geschützt. Im Bereich der Düsenspitze 7 mündet die konzentrische Ringkammer in zahlreiche über dem Umfang der Aussenwand 10 verteilte feine Bohrungen 11, durch die das Kühl- oder Arbeitsgas ausströmt. Das Keramikteil 9 zur Halterung der Düsenspitze 7 kann unmittelbar in die Gesamtanordnung integriert werden.

Figur 2 zeigt eine Düsenspitze 7 in Kompaktbauweise, die ebenfalls mit einer konzentrischen Ringkammer 5 versehen ist. Diese ist jedoch etwas schmaler ausgebildet als beim Ausführungsbeispiel gemäss Figur 1. Die von der Kammer ausgehenden Bohrungen 11 sind in einem spitzen Winkel Alpha zur Mittelachse schräg nach unten gerichtet bzw. weggeneigt. Dabei wird die Düsenumgebung durch den austretenden Gasstrahl stets sauber gehalten, ohne dass dabei der aus der Austrittsöffnung austretende Strahl beeinflusst wird. Durch das Wegblasen von Verunreinigungen auf dem Werkstück 3 wie z.B. Metallspäne usw. wird auch verhindert, dass die als Abstandssensor dienende Düsenspitze 7 fehlerhafte Signale an den Sensor abgibt Die Bohrungen 11 können sehr zahlreich sein und einen Durchmesser von wenigen Zehntel Millimeter aufweisen, so dass die Aussenwand 10 im Bereich der Bohrungen praktisch als mikroperforierte Fläche bezeichnet werden kann. Die Aussenwand 10 könnte aber auch einen Abschnitt aufweisen, der mit einer mikroporösen Materialstruktur versehen ist.

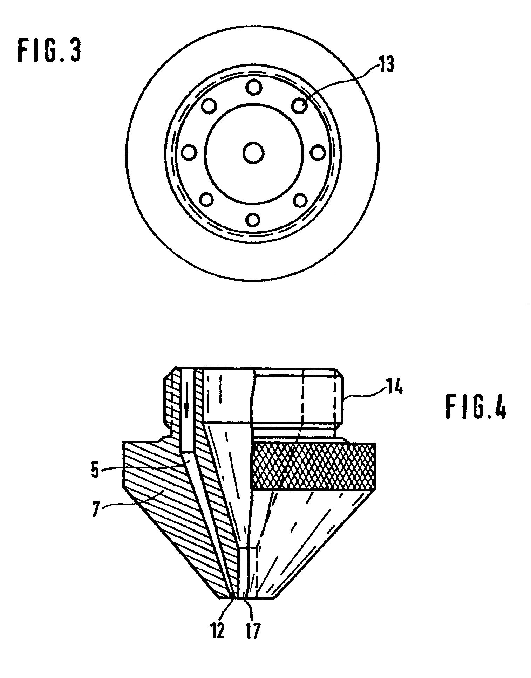

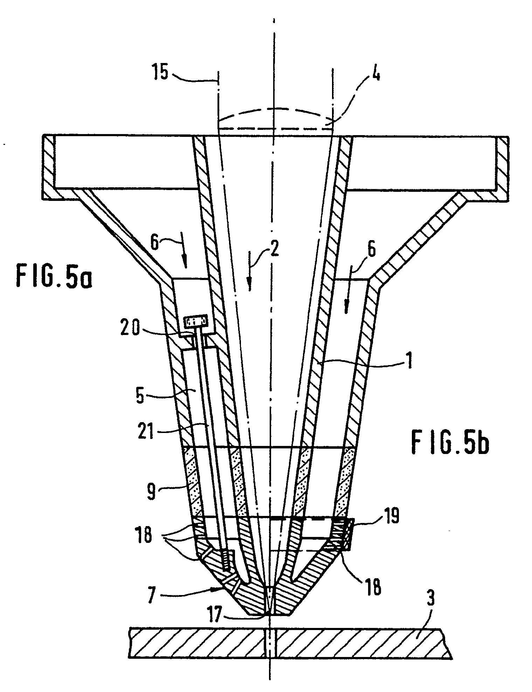

Beim Ausführungsbeispiel gemäss Figur 3 und 4 mündet die konzentrische Ringkammer nicht in feine Bohrungen, sondern in einen Ringspalt 12, der unmittelbar um die Austrittsöffnung 17 für das Arbeitsgas geführt ist. Selbstverständlich könnten die Ausführungsbeispiele gemäss den Figuren 3 und 4 auch derart kombiniert werden, dass sowohl ein Ringspalt 12 als auch feine Bohrungen 11 vorhanden sind. Figur 3 zeigt eine Draufsicht auf die Düsenspitze gemäss Figur 4. Daraus ist ersichtlich, dass die konzentrische Kammer 5 über Bohrungen 13 mit dem Kühl- oder Arbeitsgas versorgt wird. Die Düsenspitze kann mit einem Gewinde 14 versehen sein, so dass sie von unten in eine Düse bzw. in ein Keramikteil geschraubt werden kann.

Aufbau und Wirkungsweise der Sensorelektronik 8 mit ihren Schwingkreiskomponenten sind dem Fachmann an sich bereits bekannt und werden daher hier nicht mehr beschrieben.

Das Ausführungsbeispiel gemäss den Figuren 5a und 5b ist vom Aufbau her ähnlich wie dasjenige gemäss Figur 1. Die Düsenspitze 7 ist über ein isolierendes Keramikteil 9 mit der restlichen Düse 1 verbunden. Rund um die Austrittsöffnung 17 sind Kühlöffnungen 18 angeordnet, die in ihrer Gesamtheit eine mikroperforierte Fläche ergeben. Das Kühlgas 6, oder unter bestimmten Voraussetzungen auch das Arbeitsgas 2, strömt jedoch nur bei bestimmten Temperaturverhältnissen an der Düsenspitze durch die Kühlöffnungen

Zur Freigabe der Kühlöffnungen 18 dient auf der linken Bildhälfte gemäss Figur 5a eine Ventilvorrichtung 20. Die Ringkammer 5 erhält nur dann Kühlgas, wenn das Ventil 20 geöffnet wird. Eine Ventilstange 21 ist derart mit der Düsenspitze 7 verbunden, dass sie sich bei starker Wärmeentwicklung an der Düsenspitze ausdehnt und so mechanisch das Ventil 20 öffnet.

Auf der rechten Bildhälfte beim Ausführungsbeispiel gemäss Figur 5b dient als Schliessvorrichtung zum Verschliessen der Kühlöffnungen 18 ein Ring 19. Dieser Ring 19 könnte beispielsweise eine amorphe Materialstruktur aufweisen, die bei Erwärmung einen Gasdurchtritt erlaubt und derart die Kühlöffnungen 18 freigibt.

Bei beiden Varianten könnte anstelle des Kühlgases 6 auch unmittelbar das Arbeitsgas 2 durch die Kühlöffnungen 18 geleitet werden. Ausserdem wäre es denkbar, die Kühlöffnungen durch eine Schliessvorrichtung zu betätigen, welche auf andere Weise reagiert.

## Ansprüche

1. Laserbearbeitungswerkzeug mit einer Düse (1) für die Zufuhr eines Arbeitsgases (2) zu einem Werkstück (3), wobei die Düse (1) etwa koaxial zur optischen Achse der Laseroptik (4) angeordnet ist und von einer Ringkammer (5) für die Zufuhr eines Kühlund/oder Arbeitsgases zur Düsenspitze umgeben ist, sowie mit einer Vorrichtung für die Abstandsregelung zwischen der Düsenspitze (7) und dem Werkstück (3), bestehend aus einer Sensorelektrode und einer mit dieser verbundenen Sensorelektronik, wobei die Sensorelektronik (8) derart in der Ringkammer angeordnet ist, dass sie vom Kühl- oder Arbeitsgas umströmt wird.

2. Laserbearbeitungswerkzeug nach Anspruch 1, dadurch gekennzeichnet, dass die Düsenspitze (7) als einstückiges Bauteil ausgebildet ist, das den Endabschnitt der Düse bildet und das wenigstens eine Austrittsöffnung (11, 12, 18) aufweist, die in Wirkverbindung mit der Ringkammer (5) steht.

3. Laserbearbeitungswerkzeug nach Anspruch 2, dadurch gekennzeichnet, dass die Düsenspitze (7) als Sensorelektrode ausgebildet ist.

4. Laserbearbeitungswerkzeug nach Anspruch 3, dadurch gekennzeichnet, dass die Düsenspitze von einem Keramikteil gehalten ist.

5. Laserbearbeitungswerkzeug nach einem der Ansprüche 2 bis 4, dadurch gekennzeichnet, dass die Austrittsöffnung als Ringspalt (12) ausgebildet ist, der die Düsenöffnung umgibt.

6. Laserbearbeitungswerkzeug nach einem der Ansprüche 2 bis 4, dadurch gekennzeichnet, dass die Ringkammer an der Düsenspitze in eine Mehrzahl über den Umfang ihrer Aussenwand verteilter Kühlöffnungen (11, 18) mündet.

7. Laserbearbeitungswerkzeug nach Anspruch 6, dadurch gekennzeichnet, dass die Kühlöffnungen in einem spitzen Winkel zur Mittelachse der Düsenspitze nach aussen von der Mittelachse weggeneigt sind.

8. Laserbearbeitungswerkzeug nach einem der Ansprüche 2 bis 4, dadurch gekennzeichnet, dass die Aussenwand der Düsenspitze Kühlöffnungen in der Form eines mikroporösen Abschnitts aufweist, und dass die Ringkammer in diesen Abschnitt mündet.

9. Laserbearbeitungswerkzeug nach einem der Ansprüche 6 bis 8, dadurch gekennzeichnet, dass die Kühlöffnungen (18) oder wenigstens ein Teil davon durch eine wärmereaktive Schliessvorrichtung vom Gasstrom abtrennbar sind, welche erst beim Erreichen einer bestimmten Temperatur an der Düsenspitze öffnet.

10. Laserbearbeitungswerkzeug nach Anspruch 9, dadurch gekennzeichnet, dass die Schliessvorrichtung aus einem die Kühlöffnungen (18) verschliessenden Ring (19) besteht, der bei Wärmeeinwirkung die Kühlöffnungen freigibt.

11. Laserbearbeitungswerkzeug nach Anspruch 9, dadurch gekennzeichnet, dass die Schliessvorrichtung ein Ventil (20) ist, das durch Wärmeentwicklung an der Düsenspitze (7) steuerbar ist und den Gasstrom zu den Kühlöffnungen (18) freigibt bzw. verschliesst.

12. Laserbearbeitungswerkzeug nach einem der Ansprüche 1 bis 11, dadurch gekennzeichnet, dass die Sensorelektronik ringförmig ausgebildet ist.

## Claims

1. Laser processing tool with a nozzle (1) for the delivery of a working gas (2) to a workpiece (3), whereby the nozzle (1) is arranged to be approximately co-axial to the optical axis of the laser lens (4) and is surrounded by an annular chamber (5) for the delivery of a cooling and/or a working gas to the nozzle tip, as well as with a device for the regulation of the distance between the nozzle tip (7) and the workpiece (3), comprising a sensor electrode and sensor electronics to which this is connected, whereby the sensor electronics (8) are arranged within the annular chamber in such a way that the cooling or working gas flow circulates around them.

2. Laser processing tool according to claim 1, characterized in that the nozzle tip (7) is formed as a single-piece component which forms the end portion of the nozzle and which exhibits at least one outlet opening (11, 12, 18) which is coordinated with the annular chamber (5).

3. Laser processing tool according to claim 2, characterized in that the nozzle tip is formed as a sensor electrode.

4. Laser processing tool according to claim 3, characterized in that the nozzle tip is held by a ceramic part.

5. Laser processing tool according to one of the claims 2 to 4, characterized in that the outlet opening is formed as an annular slit (12) which surrounds the nozzle outlet.

6. Laser processing tool according to one of the claims 2 to 4, characterized in that the annular chamber on the nozzle tip opens out into numerous cooling openings (11, 18) distributed around the circumference of its outer wall.

7. Laser processing tool according to claim 6, characterized in that the cooling openings are inclined outwardly away from the middle axis at an apex angle to the middle axis of the nozzle tip.

8. Laser processing tool according to one of the claims 2 to 4, characterized in that the outer wall of the nozzle tip exhibits cooling openings in the form of a microporous portion, and that the annular chamber opens out into this portion.

9. Laser processing tool according to one of the claims 6 to 8, characterized in that the cooling openings (18), or at least some of them, are able to be separated from the gas flow by a heat activated closing device which only opens when a definite temperature is reached at the nozzle tip.

10. Laser processing tool according to claim 9, characterized in that the closing device comprises a ring (19) which seals the cooling openings (18) and which unblocks the cooling openings through the effect of heat.

11. Laser processing tool according to claim 9, characterized in that the closing device is a valve (20) which is controllable by the development of heat at the nozzle tip (7) and unblocks, respectively seals the gas flow to the cooling openings (18).

12. Laser processing tool according to one of the claims 1 to 11, characterized in that the sensor electronics are annularly formed.

**Revendications**

1. Outil d'usinage par laser comportant une tuyère (1) destinée à amener un gaz de travail (2) vers une pièce à usiner (3), la tuyère (1) étant disposée à peu près coaxialement avec l'axe optique du système optique laser (4) et entourée d'une chambre annulaire (5) destinée à amener un gaz de refroidissement et/ou de travail vers la pointe de la tuyère, ainsi qu'un dispositif de réglage de l'écartement entre la pointe de tuyère (7) et la pièce à usiner (3), composé d'une électrode de détection et d'un système électronique de détection relié à celle-ci, ledit système électronique de détection (8) étant disposé dans la chambre annulaire de manière à être entouré par l'écoulement du gaz de refroidissement ou de travail.

2. Outil d'usinage par laser selon la revendication 1, caractérisé en ce que la pointe de tuyère (7) est conçue comme un élément monobloc formant la section finale de la tuyère et présentant au moins un orifice de sortie (11, 12, 18) qui est en relation fonctionnelle avec la chambre annulaire (5).

3. Outil d'usinage par laser selon la revendication 2, caractérisé en ce que la pointe de tuyère (7) est conçue comme une électrode de détection.

4. Outil d'usinage par laser selon la revendication 3, caractérisé en ce que la pointe de tuyère est maintenue par une pièce en céramique.

5. Outil d'usinage par laser selon l'une des revendications 2 à 4, caractérisé en ce que l'orifice de sortie est conçu comme une fente annulaire (12) qui entoure l'orifice de la tuyère.

6. Outil d'usinage par laser selon l'une des revendications 2 à 4, caractérisé en ce que la chambre annulaire débouche à la hauteur de la pointe de tuyère dans une multiplicité d'orifices de refroidissement (11, 18) répartis sur la circonférence de sa paroi extérieure.

7. Outil d'usinage par laser selon la revendication 6, caractérisé en ce que les orifices de refroidissement sont inclinés vers l'extérieur, suivant un anglr aigu par rapport à l'axe médian de la pointe de tuyère les éloignant dudit axe médian.

8. Outil d'usinage par laser selon l'une des revendications 2 à 4, caractérisé en ce que la paroi extérieure de la pointe de tuyère présente des orifices de refroidissement ayant la forme d'une section microporeuse et en ce que la chambre annulaire débouche dans cette section.

9. Outil d'usinage par laser selon l'une des revendications 6 à 8, caractérisé en ce que les orifices de refroidissement (18) ou au moins une partie de ces orifices sont aptes à être séparés du courant de gaz à l'aide d'un dispositif de fermeture réactif à la chaleur qui ne s'ouvre que lorsqu'une température donnée est atteinte au niveau de la pointe de tuyère.

10. Outil d'usinage par laser selon la revendication 9, caractérisé en ce que le dispositif de fermeture se compose d'un anneau (19) fermant les orifices de refroidissement (18) et les dégageant en présence de chaleur.

11. Outil d'usinage par laser selon la revendication 9, caractérisé en ce que le dispositif de fermeture consiste en une soupape (20) qui est apte à être actionnée sous l'effet d'un dégagement de chaleur au niveau de la pointe de tuyère et qui libère, respectivement bloque le courant de gaz vers les orifices de refroidissement (18).

12. Outil d'usinage par laser selon l'une des revendications 1 à 11, caractérisé en ce que le système électronique de détection est conçu en forme d'anneau.

FIG.1

FIG.2

FIG.3

13

FIG.4

14

5

7

12  17

FIG.5a

FIG.5b